# EUROPÄISCHE PATENTSCHRIFT

(11) **EP 3 119 728 B1**
(45) Veröffentlichungstag und Bekanntmachung des Hinweises auf die Patenterteilung: **12.06.2019**
(21) Anmeldenummer: 15711437.2
(22) Anmeldetag: 27.02.2015
(51) Int. Cl.: C03C 23/00, B23K 26/00, B41M 5/26, C03B 27/00, C03B 27/04, G02B 5/02, B23K 26/0622, B23K 26/53, B23K 103/00, B23K 26/082

(54) **HERSTELLVERFAHREN EINES VORGESPANNTEN GLASARTIKELS MIT LASERINNENGRAVUR**
METHOD OF PRODUCTION OF A TEMPERED GLASS ARTICLE HAVING A SUB-SURFACE LASER ENGRAVING
PROCÉDÉ DE FABRICATION ASSOCIÉ D'UN ARTICLE DE VERRE PRÉCONTRAINT COMPRENANT UNE GRAVURE INTERNE AU LASER

(30) Priorität: 19.03.2014 DE 102014205066
(43) Veröffentlichungstag der Anmeldung: 25.01.2017
(73) Patentinhaber: SCHOTT AG, 55122 Mainz (DE); Schott Orim Sanayi Ve Ticaret A.S., 59500 Cerkezköy (TR)
(72) Erfinder: KARAGÖZ, Hüda, 59850 Corlu/Tekirdag (TR); CURDT, Axel, 65388 Schlangenbad (DE)
(86) Internationale Anmeldenummer: PCT/EP2015/054109
(87) Internationale Veröffentlichungsnummer: WO 2015/139929

(56) Entgegenhaltungen:
- DE-A1- 4 407 547
- DE-A1- 10 015 702
- DE-A1- 10 162 111
- DE-B3-102008 004 995
- DE-U1- 20 117 697
- JP-A- 2004 323 252
- US-A1- 2008 304 525

## Beschreibung

Die Erfindung betrifft das Herstellverfahren für einen Glasartikel mit einer Laserinnengravur und einer Vorspannung der Oberfläche.

Die Erfindung geht aus von einem Körper aus Glas, mit einer unter der Oberfläche des Körpers angeordneten Markierung, erzeugt durch einen auf die Oberfläche des Körpers gerichteten Laserstrahl, der den Körper bis zu einer vorbestimmten Tiefe durchdringt und an der Stelle der gewünschten Markierung innerhalb des Glaskörpers fokussierbar ist, und dadurch am Ort der gewünschten Markierung eine Materialveränderung entstehen lässt, die eine sichtbare Veränderung einer sekundär eingebrachten Strahlung zur Folge hat, ohne die Oberfläche des Glaskörpers zu verändern.

Solche mittels Laserstrahlung markierten Gläser sind bekannt. Beispielsweise aus dem europäischen Patent EP 0543899 B2, in dem im Anspruch 1 ein Verfahren zum Versehen eines Materialkörpers mit einer unter der Oberfläche angeordneten Markierung, die eine gewünschte Bezeichnung darstellt, beschrieben ist, wobei das Verfahren die Schritte aufweist, auf eine Oberfläche des Körpers einen Strahl hoher Energiedichte zu richten, der das Material wenigstens bis zur Tiefe der gewünschten Markierung zu durchdringen vermag, den Strahl an einem Ort zu fokussieren, der von der Oberfläche einen Abstand aufweist und innerhalb des Materials angeordnet ist, um so lokalisierte Ionisierung des Materials und die Bildung einer Markierung an dem Ort in Form eines Gebietes von erhöhter Undurchlässigkeit für elektromagnetische Strahlung im wesentlichen ohne irgendeine feststellbare Änderung der Oberfläche zu bewirken und den Brennpunkt des Strahls relativ zu dem zu markierenden Körper zu bewegen, so dass die Markierung eine vorbestimmte Form haben kann. Der unabhängige Anspruch 14 dieses Patentes bezieht sich auf den markierten Materialkörper an sich und in der Beschreibung wird der Materialkörper als beispielsweise aus Glas oder Plastik bestehend definiert.

Auch aus der deutschen Patentschrift DE 19855623 C1 ist ein Verfahren zur Erzeugung einer unter der Oberfläche liegenden Markierung in einem Körper aus Glas bekannt, das eine Transmissionskurve mit einem Plateaubereich bei Wellenlängen, die größer als die von Röntgenstrahlen sind, aufweist, wobei auf eine Oberfläche des Körpers ein Laserstrahl gerichtet wird, der den Körper bis zu der vorbestimmten Tiefe der Markierung zu durchdringen vermag und ferner an dem vorbestimmten Ort der Markierung innerhalb des Glases fokussiert wird und eine solche Leistungsdichte aufweist, dass an dem Ort eine Markierung in Form eines sich durch eine verringerte Durchlässigkeit für elektromagnetische Strahlung auszeichnenden Materialveränderung entsteht, im wesentlichen, ohne dass an der Oberfläche des Körpers eine irgendwie feststellbare Veränderung eintritt, wobei eine Wellenlänge des Laserlichtes verwendet wird, bei der das Glas teildurchlässig ist und die kleiner als alle dem Plateaubereich entsprechenden Wellenlängen des Laserlichtes ist.

Weiterhin ist aus der deutschen Gebrauchsmusterschrift DE 20 2006 004064 U1 eine mit einer Beschriftung und/oder mit Ornamenten versehene Glaskeramikscheibe bekannt, wobei die Schriftzeichen und/oder die Ornamentik von im Scheibeninneren mittels eines Laserstrahles hervorgerufenen Strukturänderungen des Scheibenmateriales gebildet ist.

Es gibt jedoch nur wenig Stand der Technik, welcher die Bereitstellung von derartigen Glasartikeln mit einer Druckvorspannung der Oberfläche betrifft. Vorgespannten Glasartikeln kommt jedoch in vielen Anwendungen, wo eine hohe mechanische Festigkeit erforderlich ist, eine große Bedeutung zu. Da bei Gläsern die Zugfestigkeit auf Grund von Oberflächenfehlern stets kleiner ist als die Druckfestigkeit, laufen Maßnahmen zur Oberflächenhärtung von Gläsern stets darauf hinaus, die Oberflächenschichten von Gläsern unter Druckspannung zu setzen, um in der Glasoberfläche vorhandene Risse zusammenzudrücken und somit am Öffnen, das heißt an der Einleitung des Bruchvorganges zu hindern.

Erst wenn die Belastung größer als die erzeugte Druckspannung wird, besteht die Gefahr des Bruches. Es werden dabei im Wesentlichen zwei Methoden der Oberflächenhärtung unterschieden, die thermische Härtung und die chemische Härtung.

Thermisch vorgespannte Glasscheiben werden beispielsweise eingesetzt in Haushaltsgeräten, für Flugzeug-Fenster, für durchbruchhemmende Verglasungen und für Brandschutzverglasungen. Um einen Glasgegenstand thermisch gut härten zu können, muss er eine genügend große Wandstärke von mindestens etwa 2 mm besitzen. Ist die Dicke zu gering, so kann sich kein ausreichender Temperaturgradient bei der Abkühlung einstellen und die Druckspannungszone fällt zu dünn aus; die vorhandenen Risse dringen dann nur noch tiefer in die Zugspannungszone ein. Bei der thermischen Härtung lassen sich Steigerung der Biegefestigkeit um den Faktor 5 bis 7, der Zugfestigkeit um den Faktor 3 bis 4 erzielen. Ferner ist mit der thermischen Oberflächenhärtung ein weiterer Vorteil verbunden, nämlich ein günstigeres Bruchverhalten. Im zuggespannten Inneren des Glasstücks ist eine beträchtliche Energiemenge gespeichert, die beim Eindringen eines Risses wegen der plötzlichen Entspannung Stoßwellen hervorruft, die das Glasstück rasch zertrümmern, wobei nun kleine Bruchstücke ohne gefährliche Splitterwirkung entstehen. Thermisch gehärtete Gläser kann man deswegen nicht mehr bearbeiten.

Die Bereitstellung von Glasartikeln mit Innengravur und einer Druckvorspannung der Oberfläche ist Hauptgegenstand der DE 10015702 A1 sowie auch der DE 10 2008 004995 A1. Die DE 10015702 A1 lehrt, dass das Einbringen einer Laserinnengravur in einen flachen Glaskörper erfolgen kann, indem die Innengravur in einem Volumen unmittelbar unterhalb der Oberfläche des Glasartikels angeordnet wird, welcher unter Druckspannung steht. In Absatz [0012] wird gefordert, dass sich sämtliche Innengravurpunkte einer dreidimensionalen Kennzeichnung innerhalb des Abschnittes befinden, der unter Druckspannungen steht. Ferner soll es laut Hauptanspruch der DE 10015702 A1 auch möglich sein, in einem ersten Schritt eine Lasergravur unmittelbar unterhalb der Oberfläche des Glasartikel anzuordnen und anschließend in einem zweiten Schritt eine Härtung durchzuführen. Ebenso lehrt die DE 10 2008 004995 A1 in dem Anspruch 1, eine Markierung mittels Laserstrahlung in einen oberflächengehärteten Körper aus Glas ausschließlich in dem unter Druckspannung stehenden Innenbereich des Glaskörpers zu erzeugen. Das Anbringen der Laserinnengravur innerhalb der unter Druckspannung stehenden Bereiche weist jedoch zum Beispiel den Nachteil auf, dass zum Beispiel bei thermisch vorgespanntem Glas nur eine dünne Oberflächenschicht mit einer Schichtdicke von ungefähr 1/6 der Scheibendicke unter Druckspannung steht und somit für die Laserinnengravur zur Verfügung steht, während ein Großteil des Volumens von ca. 2/3 unter Zugspannung steht. Somit ist für die zuverlässige Positionierung der Laserinnengravur in dem unter Druckspannung stehenden Bereich eine hohe Positioniergenauigkeit während der Gravur erforderlich. Die Problematik der hohen Positioniergenauigkeit ergibt sich indirekt auch aus Anspruch 7 der DE 10015702 A1. Es besteht somit bei diesen Verfahren auch die Gefahr, die Oberfläche des Glaskörpers beim Einbringen der Innengravur zu verletzen.

Die DE 20117697 U1 betrifft eine Anzeigevorrichtung mit einem monolithischen Glaskörper und einer mittels eines Lasers eingravierten Symboldarstellung. Gemäß dieser Druckschrift kann 'gelasertes Flachglas, wie es als Einscheibensicherheitsglas bekannt ist', nach einer Laserbearbeitung kaum noch nachträglich thermisch gehärtet werden, da durch die Laserbearbeitung große Spannungen aufgebaut werden.

Kommerzielle Anbieter von Laserinnengravuren in Glas lehnen es in der Regel ab, Laserinnengravuren in thermisch vorgespanntem Glas anzubringen, wie zum Beispiel der folgenden Internetseite http://cerion-laser.com/applications-sub-surface-glass-engraving.htm zu entnehmen ist: "ESG oder TVG - also thermisch vorgespanntes Glas oder Glas, welches zu ESG oder TVG weiterverarbeitet werden soll, lässt sich leider nicht zuverlässig mit einer Innengravur versehen. Die vom Laser erzeugten Mikrostrukturen - so zeigt die Erfahrung - können selbst wenn das ESG oder TVG zunächst stabil erscheinen sollte, noch viele Monate später zu einem plötzlichen Spontanbruch des Glases führen."

Es ist daher davon auszugehen, dass die Bereitstellung thermisch vorgespannter Glasartikel mit Laserinnengravuren derzeit nicht stabil oder zumindest nur stark eingeschränkt unter Verlust der mechanischen Festigkeit möglich ist.

Der Erfindung liegt die Aufgabe zugrunde, unter Umgehung der Nachteile des Standes der Technik ein Herstellverfahren für einen vorgespannten Glasartikel mit einer Laserinnengravur bereitzustellen.

Die Aufgabe wird durch die Merkmale des unabhängigen Patentanspruchs gelöst, vorteilhafte Ausgestaltungen und Weiterbildungen der Erfindung können den Unteransprüchen entnommen werden.

Der Glasartikel weist eine Oberfläche und einen Innenbereich auf, wobei die Oberfläche eine Druckspannung aufweist und der Innenbereich wenigstens einen Bereich von Druckspannung und wenigstens einen Bereich von Zugspannung aufweist und wobei im Innenbereich des Körpers eine Laserinnengravur angeordnet ist. Der Glasartikel ist dadurch gekennzeichnet, dass die Laserinnengravur in einem unter Zugspannung stehenden Bereich angeordnet ist.

Die Erfinder haben erkannt, dass eine Laserinnengravur entgegen der im Stand der Technik vertretenen Lehre überraschenderweise durchaus in einem unter Zugspannung stehenden Bereich angeordnet sein kann, sofern das Vorspannen nach dem Einbringen der Laserinnengravur erfolgt. So können beispielsweise ungehärtete Kalk-Natron-Glasscheiben einer Scheibendicke von 4 mm und 6 mm gemäß Ausführungsbeispielen 1 und 2 nach dem Einbringen einer Laserinnengravur ungefähr in der Mittelebene der Scheibe in üblicher Weise thermisch hoch vorgespannt werden, ohne dass es zu einem Bruch der Scheibe kommt. Die derartig hergestellten Scheiben weisen eine hohe mechanische Festigkeit auf und erfüllen die Anforderungen an entsprechendes thermisch vorgespanntes Glas beziehungsweise Sicherheitsglas. Bei Umkehrung der Prozessreihenfolge, also dem Versuch, eine Laserinnengravur innerhalb einer bereits thermisch vorgespannten Kalk-Natron-Glasscheiben einer Scheibendicke von 6 mm ungefähr in der Mittelebene der Scheiben in einem Abstand von ungefähr 2 cm vom Rand anzubringen, kam es hingegen häufig zu einem Bruch der Scheibe direkt beim Einbringen der Laserinnengravur, wie dem Gegenbeispiel 2 zu entnehmen ist.

Die erfindungsgemäße Lehre ermöglicht somit die Bereitstellung eines vorgespannten, mechanisch stabilen Glasartikels mit einer Innengravur. Die zu Grunde liegende Erkenntnis stellt eine Abkehr von dem bisherigen Stand der Technik dar und überwindet ein Vorurteil des Standes der Technik.

Für die Ursache des Einflusses der Reihenfolge der beiden Prozessschritte Laserinnengravur und Thermisches Vorspannen besteht derzeit keine gesicherte Erklärung, so dass die erfindungsgemäße Lehre und Erkenntnis als sehr überraschend einzustufen sind. Ohne an diese Theorie gebunden zu sein, wird vermutet, dass es durch das Aufwärmen des noch unvorgespannten Glasartikels bei dem Prozess des Vorspannens zu einer partiellen Ausheilung der Defekte kommt, welche durch die Laserinnengravur erzeugt worden sind oder zu einem Abbau der durch die Laserinengravur induzierten mechanischen Spannungen um die Defekte kommt. Dadurch scheinen die Defekte trotz ihrer Anordnung in einem Bereich, welcher nach dem Vorspannen unter Zugspannung steht, nicht mehr als Rissauslöser zu wirken. Die lichtstreuende Wirkung der Defekte bleibt aber erhalten. Ebenso könnte die Ursache darin begründet sein, dass es beim Einbringen der Laserinnengravur in einen bereits vorgespannten Glaskörper zu einer ungünstigen Überlagerung der bestehenden Zugspannung mit der durch den Laser erzeugten temporären Spannung kommt. So wird durch den Laser temporär eine hohe Temperatur und ein entsprechendes Spannungsfeld erzeugt, eventuell kommt es sogar zu einem lokalen Verdampfen des Glases, so dass aufgrund des Dampfdruckes ebenfalls temporäre Spannungen in dem Glaskörper erzeugt werden. Diese nur temporär vorhandenen Spannungen sind bei einem Vorspannen des Glaskörpers nach dem Lasergravieren bereits abgeklungen.

Bei dem Glasartikel kann es sich im Allgemeinen um einen beliebig geformten Körper aus einem bestimmten Glastyp handeln, z.B. um einen Glasblock, eine ebene oder auch eine gewölbte Scheibe. Es kann sich ferner um einen beliebigen Glastyp handeln, zum Beispiel optische oder technische Gläser. Aufgrund der guten Verfügbarkeit handelt es sich bevorzugt um ein handelsübliches Kalk-Natron-Glas, welches als Floatglas in hohen Qualitäten und verschiedensten Abmessungen und Reinheitsgraden verfügbar ist. Aus ästhetischen Gründen bevorzugt sind Fe₂O₃-arme Glasqualitäten, welche eine geringere Grünstichigkeit aufweisen, jedoch mehr kosten als die grünstichige Standardqualität. Ebenso kann es sich um Borosilikatglas, z.B. gefloatete Borosilikatglasscheiben der Marke Borofloat der Schott AG handeln.

Die Laserinnengravur besteht im Allgemeinen aus wenigstens einem Defekt einer Größe von wenigstens 10 µm, welcher mit wenigstens einem Laser erzeugt worden ist. Der Defekt ist vollständig innerhalb des Glasartikels angeordnet und erstreckt sich nicht bis an die Oberfläche des Glasartikels. Er ist bevorzugt mit dem unbewaffneten Auge, also ohne die Zuhilfenahme von optischen Hilfsmitteln sichtbar. Bevorzugt besteht eine Laserinnengravur aus einer Vielzahl von Defekten, welche in räumlichen Gruppen angeordnet sind. Besonders bevorzugt sind die Defekte dabei so klein und so dicht benachbart angeordnet, dass die Einzeldefekte für das unbewaffnete Auge, also ohne optische Hilfsmittel, nicht unterscheidbar sind und ein homogener Eindruck entsteht.

Gemäß der Erfindung wird der Glasartikel thermisch vorgespannt, wobei die Oberfläche eine Druckspannung von mindestens 90 MPa aufweist. Bei einer Vorspannung der Oberfläche von 40 MPa bis ungefähr 70 MPa wird üblicherweise von thermisch gehärtetem Glas gesprochen, während eine Einstufung als Sicherheitsglas oder "voll vorgespanntes Glas" Vorspannungswerte von über 70 MPa beziehungsweise 100 MPa erfordert.

In einer bevorzugten Ausführungsform ist der Glasartikel eine Scheibe mit einer Scheibendicke D von 2 mm bis 12 mm, bevorzugt 3 mm bis 9 mm und besonders bevorzugt 4 mm bis 6 mm. Derartige Scheiben aus Kalk-Natron-Glas sind von Flachglasherstellern kostengünstig erhältlich und thermisch oder auch chemisch vorspannbar. Für die meisten Anwendungen kommen Scheiben mit einer Scheibendicke von 3 mm bis 9 mm zum Einsatz, welche thermisch sehr gut vorgespannt werden können. Die Scheibe kann plan oder auch gewölbt sein. So kann es sich beispielsweise auch um eine gewölbte Fensterscheibe eines Kraftfahrzeugs oder sonstigen Fahrzeuges handeln, bevorzugt um eine Seitenscheibe oder Heckscheibe eines Kraftfahrzeugs. Die Scheibe kann rechtwinklig sein, oder eine beliebige andere Form aufweisen, die umlaufende Kante kann ebenfalls beliebig ausgebildet sein, und z.B. einen C-Schliff aufweisen.

In einer bevorzugten Ausführungsform weist die Laserinnengravur einen minimalen Abstand von der Oberfläche der Scheibe von D/4 und bevorzugt D/3 auf. Desweiteren kann eine flächige, zweidimensionale Gravur bevorzugt etwa im Bereich der Mittelebene der Glasscheibe angeordnet sein. Im Stand der Technik DE 10015702 A1 wird gelehrt, eine Lasergravur unmittelbar unterhalb der Oberfläche eines flächigen Glaskörpers einzubringen, wo eine Druckspannung besteht, typischerweise gemäß Anspruch 2 innerhalb eines Abstands von maximal D/4 von der Scheibenoberfläche. Ferner soll es auch möglich sein, in einem ersten Schritt eine Lasergravur unmittelbar unterhalb der Oberfläche des Glaskörpers einzubringen und anschließend eine Härtung durchzuführen. Eine Reihenfolge der Prozessschritte Lasergravur und thermische Vorspannung ist dabei nicht festgelegt, wobei jedoch in den Ausführungsbeispielen grundsätzlich das thermische Vorspannen vor dem Einbringen der Laserinnengravur erfolgt.

Die Erfinder haben jedoch erkannt, dass es überraschenderweise nicht möglich ist, eine Laserinnengravur unmittelbar unterhalb der Oberfläche des Glasartikels anzuordnen, wo eine Druckspannung besteht, und anschließend eine thermische Vorspannung durchzuführen. Entsprechend lasergravierte Proben mit einer oberflächennahen Gravur sind bei dem Versuch, die Scheiben thermisch vorzuspannen, gebrochen, wie Gegenbeispiel 1 der vorliegenden Beschreibung zu entnehmen ist.

Es wird vermutet, dass dieses Brechen der Scheiben auf Zugspannungen unmittelbar unterhalb der Oberfläche des Glasartikels zurückzuführen ist, welche während des Abschreckprozesses beim thermischen Vorspannen, also dem Anblasen mit Kühlluft, auftreten. So wird beim Anblasen einer Glasscheibe mit Luft zuerst die Oberfläche stark gekühlt wird und dadurch zu Beginn des Abkühlprozesses temporär eine hohe Zugspannung in der Oberfläche der Glasartikels erzeugt, während die oberflächennahe Schicht des Glasartikels nach dem Vorspannprozess, also bei Raumtemperatur, unter Druckspannung steht.

Gemäß der vorliegenden Erfindung wird die Laserinnengravur daher gerade nicht unmittelbar unterhalb der Oberfläche des Glasartikels angeordnet, sondern in Abkehr vom Stand der Technik weist die Laserinnengravur einen Mindestabstand von der Oberfläche der Scheibe von D/4 und bevorzugt D/3 auf. Besonders bevorzugt ist die Laserinnengravur sogar im Bereich der Mittelebene angeordnet, wo bei einer thermisch vorgespannten Scheibe die größte Zugspannung besteht.

Die Lehre der vorliegenden Erfindung ist also dem Stand der Technik gerade entgegengesetzt unter der Randbedingung, dass das thermische Vorspannen erst nach dem Einbringen der Lasergravur erfolgt. Der Einfluss der Reihenfolge der Prozessschritte Lasergravieren und Vorspannen wird im Stand der Technik nicht erkannt.

In einer bevorzugten Ausführungsform besteht die Laserinnengravur aus einer Vielzahl von Defekten einer mittleren Größe G von 10 µm bis 1000 µm, bevorzugt 20 µm bis 100 µm, wobei die Defekte bevorzugt in ihrer Gesamtheit eine oder mehrere Ziffern, Buchstaben oder Symbole oder eine Kombination davon ausbilden. Die Laserinnengravur kann im Allgemeinen entsprechend dem Stand der Technik ausgeführt werden, wie er beispielsweise aus der DE 10015702 A1 oder der DE 10 2008 004995 A1 bekannt ist. Um eine gut sichtbare Laserinnengravur zu erzeugen, werden in der Regel mehrere Defekte erzeugt. Bei mikroskopischer Betrachtung erweisen sich die Defekte als Mikrorisse, die um den Punkt angeordnet sind, in welchem der Laser fokussiert wurde. Die Größe eines Einzeldefektes hängt dabei von den Laserparametern wie Wellenlänge, Fokusdurchmesser und Pulsenergie ab.

Bevorzugt sind die Defekte der mittleren Größe G in einem zweidimensionalen Raster mit einem Rasterabstand R angeordnet, und wobei das Verhältnis R/G zwischen 1 und 10, bevorzugt zwischen 2 und 5 beträgt. Dadurch ist sichergestellt, dass zwischen den Defekten eine weitgehend unbeschädigte Glasmatrix vorhanden ist. Die Lasergravur kann zum Beispiel flächig, bevorzugt 2-dimensional, ausgebildet sein. So kann es sich z.B. um einen Schriftzug oder ein Symbol handeln, welcher in einer Ebene parallel zu einer Außenoberfläche des Glasartikels angeordnet ist, bevorzugt in der Mittelebene einer Glasscheibe. Zur Erhöhung der Sichtbarkeit der Laserinnengravur kann die Laserinnengravur auch in mehreren parallelen Lagen angeordnet sein, deren Abstand größer als die mittlere Größe G ist. Derartige Laserinnengravuren sind bei Aufsicht auf die Scheibe besonders deutlich zu erkennen. Ebenso kann die Lasergravur 3-dimensional ausgebildet sein, wie es aus dem Stand der Technik bestens bekannt ist, oder die Außenoberfläche eines dreidimensionalen Körpers nachbilden.

Ein Gegenstand der vorliegenden Erfindung ist ein Verfahren zur Herstellung eines Glasartikels mit einer Laserinnengravur, welches in seinen wesentlichen Prozessschritten bereits beschrieben wurde.

Das erfindungsgemäße Verfahren umfasst in dieser Reihenfolge die Prozessschritte:
- Bereitstellung eines Glasrohlings mit einer Oberfläche und einem Innenbereich,
- Einbringen einer Laserinnengravur in einem Teilvolumen des Innenbereiches des Glasrohlings
- Vorspannen des Glasrohlings, wobei wenigstens das Teilvolumen des Innenbereiches mit der Laserinnengravur unter Zugspannung gesetzt wird, wobei der Glasrohling thermisch vorgespannt wird, und die Oberfläche des Glasartikels nach dem thermischen Vorspannen eine Druckspannung von mindestens 90 MPa aufweist.

Die zwingende Einhaltung der Reihenfolge der Prozessschritte sowie die Anordnung der Laserinnengravur in einem Teilvolumen des Innenbereiches des Glasrohlings, welcher nach dem Vorspannen des Glasrohlings unter Zugspannung gesetzt wird, wurden bereits beschrieben.

Bevorzugt weist die Oberfläche des bereitgestellten Glasrohlings eine Druckspannung von höchstens 50 MPa, bevorzugt höchstens 25 MPa und besonders bevorzugt höchstens 10 MPa auf. Wie oben ausgeführt wurde, ist das Einbringen von Laserinnengravuren in bereits thermisch vorgespannte Glasrohlinge nicht ohne weiteres möglich. Der Glasrohling sollte möglichst spannungsarm sein. Handelsübliche, nicht thermisch gehärtete bzw. vorgespannte Glasscheiben erfüllen diese Voraussetzungen und sind als Glasrohling verwendbar. Die Lasergravur kann mit den aus dem Stand der Technik hinreichend bekannten Verfahren ausgeführt werden, so dass auf eine eingehende Beschreibung hier verzichtet werden kann. Beispielhaft kann ein diodengepumpter, wassergekühlter Nd:YAG Laser des Typs Vitrolux V1 der Firma Vitro Laser GmbH, D-32423 Minden, bei Wellenlängen von 532 nm (optional 1064 nm), einer Pulswiederholfrequenz von 1 kHz und einer Pulsdauer von kleiner 10 ns eingesetzt werden. Als Optik kann eine Hochleistungs-Planfeldoptik mit einem Scanfeld von 70x70 mm² und einer Brennweite von 100 mm eingesetzt werden.

Das thermische Vorspannen des Glasrohlings kann ebenfalls gemäß den aus dem Stand der Technik bekannten Verfahren durchgeführt werden. Hierbei wird der zu härtende Glasgegenstand auf eine Temperatur knapp oberhalb des Transformationspunktes des Glases erwärmt und dann z.B. durch Anblasen mit Kaltluft oder durch Andrücken kalter Metallplatten abgeschreckt. Bei diesem Vorgang "friert" das Glas der Oberflächenschicht schneller ein als das Glas im Inneren, während sich das noch nicht eingefrorene Glasinnere weiter abkühlt und zusammenzieht. Auf diese Weise kommt es in der Glasoberfläche zur Ausbildung von Druckspannungen, während das Glasinnere unter Zugspannungen steht und die Druckspannungen kompensiert.

In einer bevorzugten Ausführungsform ist der Glasrohling eine Scheibe mit einer Scheibendicke D von 2 mm bis 12 mm, bevorzugt 3 mm bis 9 mm und besonders bevorzugt 4 mm bis 6 mm.

Erfindungsgemäß wird der Glasrohling thermisch vorgespannt, wobei die Oberfläche nach dem thermischen Vorspannen eine Druckspannung von mindestens 90 MPa aufweist. Wie dem Fachmann bekannt ist, kann die Vorspannung durch die Geschwindigkeit des Abkühlens eingestellt werden. Das Vorspannungsniveau sollte im Allgemeinen gemäß den Mindestanforderungen der jeweiligen Anwendung eingestellt werden.

In einer bevorzugten Ausführungsform erfolgt das Einbringen der Lasergravur durch einen auf die Oberfläche des Körpers gerichteten Laserstrahl, der den Glasrohling bis zu einer vorbestimmten Tiefe durchdringt, innerhalb des Glasrohlings fokussiert wird und dadurch eine sichtbare Materialveränderung entstehen lässt, ohne die Oberfläche zu verändern.

Der Glasartikel kann für zahlreiche Anwendungen eingesetzt werden. So kommen insbesondere alle Anwendungen in Frage, in welchen derzeit vorgespannte Glasscheiben eingesetzt werden, wobei durch die Laserinnengravur zusätzliche Funktionalitäten erzeugt werden können.

Bevorzugt ist eine Verwendung eines Glasartikels als Einlegeboden für Möbel oder Kühlmöbel, als Bestandteil eines Haushaltsgerätes wie beispielsweise einer Ofentürscheibe, einer Kühltruhenabdeckung, einer Dunstabzugshaube oder einer Kochfeldabdeckung, als Sichtscheibe, als Fahrzeugverglasung, als Bestandteil einer Verbundsicherheitsglasscheibe oder als Duschraumabtrennung. Durch die Laserinnengravur kann im Vergleich mit Oberflächengravuren eine Schädigung der Oberfläche vermieden worden, was zum Beispiel die Reinigung des Glasartikels vereinfacht.

Bevorzugt ist des Weiteren eine Verwendung eines Glasartikels als Beleuchtungselement in einer Baugruppe, welche wenigstens den Glasartikel und eine Lichtquelle umfasst, wobei Licht von der Lichtquelle auf die Laserinnengravur in dem Glasartikel geleitet und gestreut wird. Insbesondere in dieser Anwendung kann der Glasartikel aus besonders "weißem" Glas wie Fe₂O₃-armem Kalk-Natron-Glas oder Borofloat® der Firma Schott AG bestehen, um eine Grünstichigkeit des an der Laserinnengravur gestreuten Lichtes zu vermeiden. Es kann sich zum Beispiel um einen Einlegeboden für Möbel oder Kühlmöbel handeln, wobei durch die Laserinnengravur dekorative Effekte erzeugt werden, oder aber ein Schriftzug wie zum Beispiel ein Markennamen beleuchtet wird.

Desweiteren kann eine Laserinnengravur in einem vorgespannten Glasartikel nicht ohne Zerstörung des Glasartikels entfernt werden und stellt damit eine unmanipulierbare, dauerhafte Kennzeichnung eines vorgespannten Glasartikels dar.

Die Erfindung wird nun an einigen Ausführungsbeispielen erläutert:

### Ausführungsbeispiel 1

Als Glasrohling diente eine handelsübliche unvorgespannte Floatglasscheibe aus Kalk-Natron-Glas mit einer Scheibendicke von 6,0 mm, einer Länge von 500 mm und einer Breite von 250 mm sowie einem U-förmigen Kantenschliff. Die Scheiben wiesen eine Druckspannung der Oberfläche von weniger als 20 MPa auf, waren also nahezu spannungsfrei.

Die Laserinnengravur erfolgte mit einem grünen, frequenzverdoppelten Nd:YAG-Laser mit einer Wellenlänge von 532 nm, wie es aus dem Stand der Technik für unvorgespanntes Glas bekannt ist.

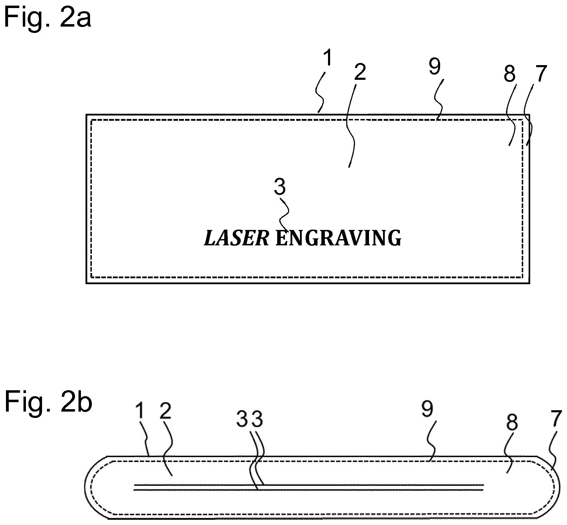

Ein Schriftzug mit einer Zeichenhöhe von ca. 10 mm und einer Länge von 100 mm wurde in einem Abstand von 5 mm von der vorderen Seitenkante der Glasscheibe eingebracht, wobei der Schriftzug eine erste Lage in einer Tiefe von 3 mm umfasst, also in der Mittelebene der Scheibe liegt und eine zweite Lage in einer Tiefe von 3,5 mm umfasst, ähnlich Figur 2. Die Lasergravur wird durch auf einem Raster angeordnete Mikrorisse gebildet, wobei der Rasterabstand in Längs- und Querrichtung der Scheibe 0,09 mm beträgt. Durch die doppelte Ausführung des Schriftzuges in zwei parallelen Lagen weist der Schriftzug eine sehr gute Sichtbarkeit unter normalen Beleuchtungsverhältnissen auf, d.h. insbesondere ohne eine besondere Einkopplung von Licht in die Glasscheibe. Bei einer Einkopplung von Licht in die Glasscheibe bevorzugt in die umlaufende Außenkante wird das Licht an der Laserinnengravur stark gestreut und der Schriftzug ist sehr gut lesbar.

Die Scheiben wurden anschließend mit einem konventionellen thermischen Vorspannprozess durch Erhitzen auf 680 bis 720 °C und starkes Anblasen mit Kühlluft vorgespannt. Die thermische Vorspannung wurde so eingestellt, dass die Scheiben einen Fragmentierung von ungefähr 100 aufweisen, was bei einer Scheibendicke von 6 mm gemäß einschlägiger Literatur (Ennio Mognato et al.: "Thermally toughened safety glass: correlation between flexural strength, fragmentation and surface compressive stress") einer Druckspannung der Oberfläche von ungefähr 95 MPa bis 100 MPa entspricht. Die Fragmentierung wurde bestimmt, indem eine auf einer Unterlage liegende Scheibe durch einen Hammerschlag ungefähr 15 mm Abstand vom Scheibenrand kontrolliert gebrochen wurde und anschließend die Anzahl von Fragmenten in einem 5 cm x 5 cm Quadrat mit einer Entfernung von wenigstens 100 mm von der Stelle des Hammerschlags ausgezählt wurde. Die Fragmentierung entspricht der Anzahl der Bruchstücke.

Zur Überprüfung der mechanischen Festigkeit wurden des Weiteren folgende Prüfungen durchgeführt:
1. Thermoschocktest: Aufheizen der Scheibe auf 185 +/-5°C in einem Ofen, Entnahme aus Ofen und Abkühlung der Scheibe mit einem Wasserstrahl einer Temperatur von 20°C und einer Stärke von 10-15 ml/s, welcher mittig auf die horizontale Glasscheibe trifft.
2. Kugelfalltest : Eine Stahlkugel mit einer Masse von 540 g und einem Durchmesser von ca. 50 mm fällt aus 410 mm Höhe auf die Mitte der Glasscheibe, entsprechend einer Energie von 2,1 Nm.
3. Gewichtfalltest: Ein zylinderförmiges Stahlgewicht mit einer Masse von 1800 g, und einer ebenen Stirnfläche fällt aus 150mm +/- 10mm auf die Mitte einer Scheibe, welche nur im Randbereich auf einem Stahlrahmen aufliegt.

Das Verfahren wurde für eine Stückzahl von 100 Floatglasscheiben identisch wiederholt.

Bei keiner Scheibe kam es im Rahmen der beschriebenen Prüfungen 1. bis 3. zu Bruch.

### Ausführungsbeispiel 2

Im Ausführungsbeispiel 2 wurde eine geringere Scheibendicke von 4,0 mm verwendet. Als Glasrohling dienten erneut handelsübliche unvorgespannte Floatglasscheiben aus Kalk-Natron-Glas mit einer Scheibendicke von 4,0 mm. Die Scheiben wiesen eine Druckspannung der Oberfläche von weniger als 20 MPa auf, waren also nahezu spannungsfrei.

Die Gravur erfolgt wie in Ausführungsbeispiel 1 in zwei Lagen, jedoch in einer Tiefe von 2,0 mm und 2,5 mm.

Das thermische Vorspannen erfolgte wie in Ausführungsbeispiel 1, wobei die Scheiben nach dem Vorspannen einen Fragmentierungsgrad von ca. 100 aufwiesen, was bei einer Scheibendicke von 4 mm einer Druckspannung der Oberfläche von ungefähr 100 bis 105 MPa entspricht.

### Gegenbeispiel 1

Das Gegenbeispiel entspricht dem Ausführungsbeispiel 1, wobei jedoch die Laserinnengravur in einer Tiefe von ungefähr 0,5 mm angeordnet wurde. Der Fachmann erwartet gemäß der allgemein anerkannten Schätzformel, dass nach dem thermischen Vorspannen etwa eine Oberflächenschicht einer Dicke von 1/6 der Scheibendicke unter Druckspannung steht, dass die Glasscheibe nach dem thermischen Vorspannen in einer Tiefe von ungefähr 1 mm die geringsten Druck- oder Zugspannungen aufweist. Die Laserinnengravur wurde somit gemäß der Lehre des Standes der Technik DE 10015702 A1 und DE 102008004995 A1 angeordnet.

Anschließend wurde versucht, die Scheiben wie in Ausführungsbeispiel 1 beschrieben, thermisch vorzuspannen auf eine Druckspannung der Oberfläche von ungefähr 95 MPa bis 100 MPa. Überraschenderweise kam es jedoch während des thermischen Vorspannens zu einem Brechen der meisten Scheiben. Das Verfahren wurde für eine Stückzahl von 100 Floatglasscheiben identisch wiederholt, wobei es bei 100 Stück zum Brechen kam.

Die im Hauptanspruch der DE 10015702 A1 mit beanspruchte Variante, dass das thermische Vorspannen nach dem Einbringen der Laserinnengravur erfolgt, ist also zumindest unter den beschriebenen Randbedingungen nicht ausführbar.

Lediglich bei umgekehrter Abfolge der Prozessschritte Thermisches Vorspannen und Laserinnengravur scheint die Lehre der DE 10015702 A1 ausführbar zu sein.

### Gegenbeispiel 2

Desweiteren wurde versucht, eine Laserinnengravur in der Mittelebene einer bereits vorgespannten Kalk-Natron-Scheibe der Scheibendicke 6 mm gemäß Ausführungsbeispiel 1 zu erzeugen, was dem Ausführungsbeispiel 1 mit einer Umkehrung der Prozessschritte Laserinnengravur und Thermisches Vorspannen entspricht. Die Scheiben wiesen eine Vorspannung der Oberfläche von 100 MPa auf. Die Glasscheiben sind während dem Einbringen der Laserinnengravur gebrochen, beziehungsweise explodiert.

In den folgenden Figuren ist die Erfindung schematisch dargestellt:
Fig. 1 Schematische Darstellung der Spannungsverteilung einer thermisch vorgespannten Glasscheibe
Fig. 2a Schematische Aufsicht auf eine erfindungsgemäße Glasscheibe mit Laserinnengravur
Fig. 2b Schematischer Querschnitt durch eine erfindungsgemäße Glasscheibe mit Laserinnengravur

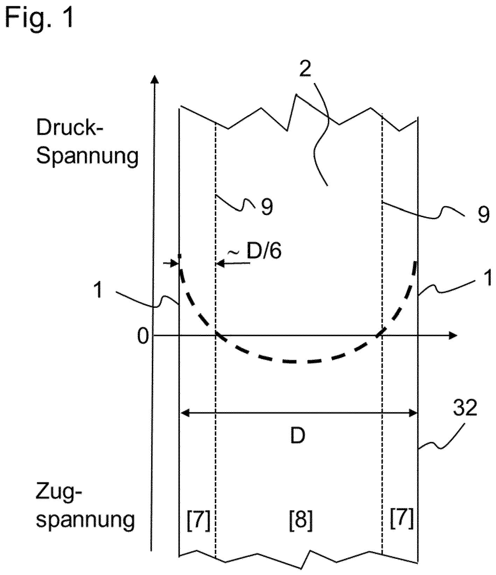

Figur 1 zeigt schematisch die Spannungsverteilung in einer thermisch vorgespannten Glasscheibe (4). An den Oberflächen (1) der Scheibe ist eine maximale Druckspannung vorhanden. Die Druckspannung erstreckt sich ausgehend von den Oberflächen (1) ungefähr bis in eine Tiefe von D/6, wobei D die Schichtdicke der Scheibe (4) ist. Die Scheibe (4) weist somit Bereiche von Druckspannung (7) sowie Zugspannung (8) auf, die in einer spannungsarme Übergangszone (9) in einander übergehen. Ein Großteil des Volumens der Scheibe (4) steht unter Zugspannung.

Figur 2a zeigt eine thermisch vorgespannte Scheibe (4) mit einer Laserinnengravur (3) in Aufsicht, Figur 2b zeigt die entsprechende Scheibe (4) im Querschnitt. Die Laserinnengravur (3) ist in einem Bereich von Zugspannung (8) ausgebildet. In Figur 2b ist die Laserinnengravur (3) außerdem ungefähr in der Mittelebene der Scheibe angeordnet, wobei die Gravur zur Erhöhung des Kontrastes in zwei parallelen Lagen mit geringem Abstand angeordnet ist. Die Scheibe weist eine Stärke von 4 mm auf.

Abschließend werden die Vorteile einer Laserinnengravur von vorgespannten Glaskörpern nochmal zusammengefasst.

Die Laserinnengravur ermöglicht eine variable Beschriftung, wie z. B. Data Matrix Codes, Logos, Barcodes, Seriennummern, Datum, Uhrzeit, Namen. Es handelt sich um ein berührungsloses Kennzeichnungsverfahren, welches im Gegensatz zu einer Oberflächengravur keinen unerwünschten Materialabtrag erzeugt, und keine Veränderung der Materialoberfläche erzeugt. Es kann somit nicht zu verunreinigungsbedingten Problemen bei nachfolgenden Beschichtungsprozessen kommen.

Erfindungsgemäß können Laserinnengravuren auch für vorgespannte Glasartikel bereitgestellt werden. Im Vergleich zum Stand der Technik steht ein deutlich größeres Teilvolumen für die Innengravur zur Verfügung, so dass an die Vorrichtungen zum Einbringen der Lasergravur geringere Anforderungen zu gestellt werden können. Eine Verletzung der Oberfläche des Glasartikels kann zuverlässig vermieden werden.

### Bezugszeichenliste:

- 1: Oberfläche
- 2: Innenbereich
- 3: Laserinnengravur
- 7: Bereich von Druckspannung
- 8: Bereich von Zugspannung
- 9: spannungsarme Übergangszone

## Patentansprüche

1. Verfahren zur Herstellung eines Glasartikels mit einer Laserinnengravur umfassend in dieser Reihenfolge die Prozessschritte:
- Bereitstellung eines Glasrohlings (9) mit einer Oberfläche (1) und einem Innenbereich (2),
- Einbringen einer Laserinnengravur (3) in ein Teilvolumen (5) des Innenbereiches (2),
- Vorspannen des Glasrohlings (9), wobei wenigstens das Teilvolumen (5) des Innenbereiches (2) unter Zugspannung gesetzt wird, wobei der Glasrohling (9) thermisch vorgespannt wird, und die Oberfläche (1) des Glasartikels nach dem thermischen Vorspannen eine Druckspannung von mindestens 90 MPa aufweist.

2. Verfahren nach dem vorhergehenden Anspruch, wobei die Oberfläche (1) des Glasrohlings (9) eine Druckspannung von höchstens 50 MPa, bevorzugt höchstens 25 MPa und besonders bevorzugt höchstens 10 MPa aufweist.

3. Verfahren nach Anspruch 1 oder 2, wobei der Glasrohling (9) eine Scheibe (4) mit einer Scheibendicke D von 2 mm bis 12 mm, bevorzugt 3 mm bis 9 mm und besonders bevorzugt 4 mm bis 6 mm ist.

4. Verfahren nach einem der Ansprüche 1 bis 3, wobei das Einbringen der Laserinnengravur (3) durch einen auf die Oberfläche (1) des Glasrohlings (9) gerichteten Laserstrahl erfolgt, der den Glasrohling (9) bis zu einer vorbestimmten Tiefe durchdringt, innerhalb des Glasrohlings (9) fokussiert wird und dadurch eine sichtbare Materialveränderung entstehen lässt, ohne die Oberfläche (1) zu verändern.

5. Verfahren nach einem der Ansprüche 1 bis 4, wobei der Glasartikel als Einlegeboden für Möbel oder Kühlmöbel, als Bestandteil eines Haushaltsgerätes, als Fahrzeugverglasung, als Bestandteil einer Verbundsicherheitsglasscheibe oder als Duschraumabtrennung verwendet wird.

6. Verfahren nach einem der Ansprüche 1 bis 4, wobei der Glasartikel als Beleuchtungselement in einer Baugruppe, welche wenigstens den Glasartikel und eine Lichtquelle umfasst, wobei Licht von der Lichtquelle auf die Laserinnengravur in dem Glasartikel (1) geleitet und gestreut wird, verwendet wird.

## Claims

1. Method for producing a glass article having a sub-surface laser engraving, comprising the process steps, in this order:
- providing a glass blank (9) having a surface (1) and an internal region (2),
- introducing a sub-surface laser engraving (3) into a partial volume (5) of the internal region (2),
- toughening the glass blank (9), wherein at least the partial volume (5) of the internal region (2) is placed under tensile stress, wherein the glass blank (9) is toughened thermally, and the surface (1) of the glass article has a compressive stress of at least 90 MPa after the thermal toughening.

2. Method according to the preceding claim, wherein the surface (1) of the glass blank (9) has a compressive stress of at most 50 MPa, preferably at most 25 MPa and particularly preferably at most 10 MPa.

3. Method according to Claim 1 or 2, wherein the glass blank (9) is a pane (4) with a pane thickness D of 2 mm to 12 mm, preferably 3 mm to 9 mm and particularly preferably 4 mm to 6 mm.

4. Method according to one of Claims 1 to 3, wherein the introduction of the sub-surface laser engraving (3) is carried out by a laser beam directed at the surface (1) of the glass blank, which penetrates the glass pane (9) as far as a predetermined depth, is focused within the glass plane (9) and, as a result, causes a visible material change to occur without changing the surface (1).

5. Method according to one of Claims 1 to 4, wherein the glass article is used as a shelf for furniture or refrigerators, as a constituent part of a domestic appliance, as vehicle glazing, as a constituent part of a composite safety glass pane or as a shower compartment divider.

6. Method according to one of Claims 1 to 4, wherein the glass article is used as a lighting element in an assembly which comprises at least the glass article and a light source, wherein light from the light source is led onto the sub-surface laser engraving in the glass article (1) and is scattered.

## Revendications

1. Procédé de fabrication d'un article en verre avec une gravure interne au laser, comprenant les étapes suivantes, dans cette séquence :
- fourniture d'une ébauche en verre (9) ayant une surface (1) et une zone interne (2),
- incorporation d'une gravure interne au laser (3) dans un volume partiel (5) de la zone interne (2),
- précontrainte de l'ébauche en verre (9), au moins le volume partiel (5) de la zone interne (2) étant soumis à une contrainte de tension, l'ébauche en verre (9) étant précontrainte thermiquement et la surface de l'article en verre, après la précontrainte thermique, possédant une contrainte de compression d'au moins 90 MPa.

2. Procédé selon la revendication précédente, la surface (1) de l'ébauche en verre (9) possédant une contrainte de compression maximale de 50 MPa, de préférence maximale de 25 MPa et notamment de préférence maximale de 10 MPa.

3. Procédé selon la revendication 1 ou 2, l'ébauche en verre (9) étant une plaque (4) ayant une épaisseur de plaque D de 2 mm à 12 mm, de préférence de 3 mm à 9 mm et notamment de préférence de 4 mm à 16 mm.

4. Procédé selon l'une des revendications 1 à 3, l'incorporation de la gravure interne au laser (3) s'effectuant par un rayon laser dirigé sur la surface (1) de l'ébauche en verre (9), lequel transperce l'ébauche en verre (9) jusqu'à une profondeur prédéfinie, est concentré à l'intérieur de l'ébauche en verre (9) et fait ainsi se produire une modification visible du matériau sans modifier la surface (1).

5. Procédé selon l'une des revendications 1 à 4, l'article en verre étant utilisé comme une tablette pour un meuble ou un réfrigérateur, comme élément constitutif d'un appareil ménager, comme vitrage de véhicule, comme élément constitutif d'une vitre en verre de sécurité feuilleté ou comme séparation d'espace de douche.

6. Procédé selon l'une des revendications 1 à 4, l'article en verre étant utilisé comme élément d'éclairage dans un sous-ensemble qui comprend au moins l'article en verre et une source de lumière, la lumière de la source de lumière étant guidée sur la gravure interne au laser dans l'article en verre (1) et dispersée.
